(19) Europäisches Patentamt
European Patent Office
Office européen des brevets

(11) **EP 3 749 111 B1**

(12) **EUROPÄISCHE PATENTSCHRIFT**

(45) Veröffentlichungstag und Bekanntmachung des Hinweises auf die Patenterteilung:
**06.04.2022 Patentblatt 2022/14**

(21) Anmeldenummer: **19704576.8**

(22) Anmeldetag: **05.02.2019**

(51) Internationale Patentklassifikation (IPC):
*A23L 27/30* (2016.01)  *A23L 2/60* (2006.01)
*A23G 3/42* (2006.01)  *A23G 4/10* (2006.01)
*A23G 9/34* (2006.01)  *A23L 21/10* (2016.01)
*A23C 9/13* (2006.01)  *A23C 9/156* (2006.01)
*A23L 33/20* (2016.01)

(52) Gemeinsame Patentklassifikation (CPC):
**A23L 27/34; A23C 9/1307; A23C 9/156; A23G 3/42; A23G 4/10; A23G 9/34; A23L 2/60; A23L 21/10; A23L 33/20**

(86) Internationale Anmeldenummer:
**PCT/EP2019/052720**

(87) Internationale Veröffentlichungsnummer:
**WO 2019/154784 (15.08.2019 Gazette 2019/33)**

(54) **FLÜSSIGES FUNKTIONSVERBESSERTES ISOMALT**

LIQUID FUNCTIONALLY IMPROVED ISOMALT

ISOMALT LIQUIDE À FONCTIONNALITÉ AMÉLIORÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.02.2018 DE 102018201920**

(43) Veröffentlichungstag der Anmeldung:
**16.12.2020 Patentblatt 2020/51**

(73) Patentinhaber: **Südzucker AG**
**68165 Mannheim (DE)**

(72) Erfinder: **BERNARD, Jörg**
**67283 Albsheim (DE)**

(74) Vertreter: **Schrell, Andreas et al**
**Gleiss Große Schrell und Partner mbB**
**Patentanwälte Rechtsanwälte**
**Leitzstrasse 45**
**70469 Stuttgart (DE)**

(56) Entgegenhaltungen:
**EP-A1- 0 625 578      EP-B2- 0 859 006**
**WO-A1-97/08958      DE-A1- 2 520 173**
**US-A- 5 298 263**

**Beschreibung**

**Flüssiges funktionsverbessertes Isomalt**

Die vorliegende Erfindung betrifft eine flüssige Isomalt-Zusammensetzung umfassend 6-O-alpha-D-glucopyranosyl-D-sorbitol (1,6-GPS) und 1-O-alpha-D-glucopyranosyl-D-mannitol (1,1-GPM) und die weiteren glycosylierten Isomalt-Komponenten 1-O-(6'-O-alpha-D-glucopyranosyl)-alpha-D-glucopyranosyl-D-mannitol (6'-g-1,1-GPM), 6-O-(6'-O-alpha-D-glucopyranosyl)-alpha-D-glucopyranosyl-D-sorbitol (6'-g-1,6-GPS), 1,6-di-O-alpha-D-glucopyranosyl-D-sorbitol (1-g,1,6-GPS) und 1,6-di-O-alpha-D-glucopyranosyl-D-mannitol (6-g-1,1-GPM), wobei das Gewichtsverhältnis von 6'-g-1,1-GPM : 6'-g-1,6-GPS : 1-g-1,6-GPS : 6-g-1,1-GPM in der flüssigen Isomalt-Zusammensetzung 1:(0,7-1,3):(0,3-1,1):(1-2) beträgt (jeweils bezogen auf Gew.-% und Trockensubstanz (TS) der glycosylierten Isomalt-Komponenten).

Isomalt (hydrierte Isomaltulose) ist ein Zuckeraustauschstoff, der als Hauptbestandteile 1,6-GPS und 1,1-GPM aufweist, und der aufgrund seiner Akariogenität, seines geringen Brennwerts und seiner Diabetikereignung vorteilhaft ist.

DE 25 20 173 A1 betrifft ein Verfahren zur Herstellung von 1,6-GPS und 1,1-GPM aus Isomaltulose und dessen Verwendung als Zuckeraustauschstoff. Die EP 0 625 578 A1 offenbart die Herstellung von Isomalt und deren Verwendung als Süßungsmittel in verschiedenen Genuss- und Lebensmittelprodukten.

EP 0 859 006 B2 und WO 1997/008958 A1 betreffen Verfahren zur Herstellung von 1,6-GPSangereicherten und 1,1-GPM angereicherten Gemischen, sowie 1,6-GPS und 1,1-GPM in reiner Form, und Verwendungen davon.

Derartige Isomalt-Zusammensetzungen werden in vielen Produkten, beispielsweise im Genuss- und Lebensmittelbereich, eingesetzt. Das breite Anwendungsspektrum von Isomalt-Zusammensetzungen erfordert je nach Endprodukt, den damit verbundenen Konsumentenwünschen und technologischen Anforderungen eine besondere Flexibilität hinsichtlich der Bereitstellung unterschiedlicher Produkteigenschaften. So setzen bestimmte Endprodukte und/oder Konsumentenwünsche auch flüssige Isomalt-Zusammensetzungen voraus, insbesondere solche, die eine geringe Verfärbung aufweisen, insbesondere nach Lagerung der Isomalt-Zusammensetzungen. Die bisher bekannten flüssigen Isomalt-Zusammensetzungen sind in ihrer Neigung zur Verfärbung, insbesondere nach Lagerung der Isomalt-Zusammensetzungen, verbesserungsfähig.

Der Erfindung liegt daher das technische Problem zugrunde, eine flüssige Isomalt-Zusammensetzung umfassend 1,1-GPM und 1,6-GPS bereitzustellen, die keine oder kaum eine Verfärbung, also eine erhöhte Farbstabilität, aufzeigt.

Die vorliegende Erfindung löst das technische Problem durch die Bereitstellung einer flüssigen Isomalt-Zusammensetzung, also eine flüssige 1,1-GPM- und 1,6-GPS-aufweisende Zusammensetzung, wobei die flüssige Isomalt-Zusammensetzung 1,1-GPM, 1,6-GPS und die glycosylierten Isomalt-Komponenten 6'-g-1,1-GPM, 6'-g-1,6-GPS, 1-g-1,6-GPS und 6-g-1,1-GPM aufweist, und wobei das Gewichtsverhältnis von 6'-g-1,1-GPM : 6'-g-1,6-GPS : 1-g-1,6-GPS : 6-g-1,1-GPM in der Isomalt-Zusammensetzung 1:(0,7-1,3):(0,3-1,1):(1-2) beträgt, bezogen auf Gew.-% und Trockensubstanz (TS) der glycosylierten Isomalt-Komponenten.

Die Erfindung beruht auf der überraschenden Feststellung, dass eine flüssige Isomalt-Zusammensetzung, die die glycosylierten Isomalt-Komponenten 6'-g-1,1-GPM (1-O-(6'-O-alpha-D-glucopyranosyl)-alpha-D-glucopyranosyl-D-mannitol), 6'-g-1,6-GPS (6-0-(6'-O-alpha-D-glucopyranosyl)-alpha-D-glucopyranosyl-D-sorbitol), 1-g-1,6-GPS (1,6-di-O-alpha-D-glucopyranosyl-D-sorbitol) und 6-g-1,1-GPM (1,6-di-O-alpha-D-glucopyranosyl-D-mannitol) in dem erfindungsgemäßen spezifischen Gewichtsverhältnis aufweist, keine oder kaum eine Verfärbung, insbesondere eine geringere Verfärbung im Vergleich zu anderen Isomalt-Zusammensetzungen, insbesondere nach Lagerung, zeigt. Die vier Komponenten 6'-g-1,1-GPM, 6'-g-1,6-GPS, 1-g-1,6-GPS und 6-g-1,1-GPM werden im Folgenden auch als "die glycosylierten Isomalt-Komponenten" bezeichnet.

In einer bevorzugten Ausführungsform der vorliegenden Erfindung weist die flüssige Isomalt-Zusammensetzung einen Gehalt an mindestens einem Lösungsmittel von mindestens 5 Gew.-%, bevorzugt mindestens 10 Gew.-%, bevorzugt mindestens 15 Gew.-%, bevorzugt mindestens 20 Gew.-%, bevorzugt mindestens 25 Gew.-%, bevorzugt mindestens 30 Gew.-%, bevorzugt mindestens 40 Gew.-%, bevorzugt mindestens 50 Gew.-%, bevorzugt mindestens 60 Gew.-%, bevorzugt mindestens 70 Gew.-%, bevorzugt mindestens 80 Gew.-%, bevorzugt mindestens 90 Gew.-%, bevorzugt mindestens 92 Gew.-%, bevorzugt mindestens 95 Gew.-%, bevorzugt mindestens 98 Gew.-%, bevorzugt mindestens 99 Gew.-% auf, bevorzugt 20 bis 95 Gew.-%, bevorzugt 30 bis 95 Gew.-%, bevorzugt 40 bis 95 Gew.-%, bevorzugt 50 bis 95 Gew.-%, bevorzugt 60 bis 95 Gew.-%, bevorzugt 20 bis 90 Gew.-%, bevorzugt 30 bis 90 Gew.-%, bevorzugt 40 bis 90 Gew.-%, bevorzugt 50 bis 90 Gew.-%, bevorzugt 60 bis 90 Gew.-%, bevorzugt 20 bis 80 Gew.-%, bevorzugt 30 bis 80 Gew.-%, bevorzugt 40 bis 80 Gew.-%, bevorzugt 50 bis 80 Gew.-%, bevorzugt 20 bis 70 Gew.-%, bevorzugt 30 bis 70 Gew.-%, bevorzugt 30 bis 60 Gew.-%, bevorzugt 40 bis 70 Gew.-%, oder bevorzugt 40 bis 60 Gew.-%, jeweils basierend auf dem Gesamtgewicht der flüssigen Isomalt-Zusammensetzung.

In einer bevorzugten Ausführungsform ist das mindestens eine Lösungsmittel der erfindungsgemäßen flüssigen Isomalt-Zusammensetzung Wasser, ein Alkohol oder ein Gemisch davon, bevorzugt Wasser, Ethanol oder ein Gemisch davon, insbesondere bevorzugt Wasser.

In einer besonders bevorzugten Ausführungsform weist die erfindungsgemäße flüssige Isomalt-Zusammensetzung neben den glycosylierten Isomalt-Komponenten und dem mindestens einen Lösungsmittel allein 1,1-GPM und 1,6-GPS auf, das heißt besteht aus diesen Komponenten. In einer weiteren bevorzugten Ausführungsform weist die erfindungsgemäße flüssige Isomalt-Zusammensetzung neben den glycosylierten Isomalt-Komponenten und dem mindestens einen Lösungsmittel allein 1,1-GPM, 1,6-GPS und 1,1-GPS auf, bevorzugt zusätzlich auch Mannit, Sorbit, Desoxy-Disaccharidalkohole, GPI und/oder Glucosylglycitole, das heißt besteht aus diesen Komponenten. In einer besonders bevorzugten Ausführungsform ist vorgesehen, dass die erfindungsgemäße flüssige Isomalt-Zusammensetzung allein die glycosylierten Isomalt-Komponenten, das mindestens eine Lösungsmittel, 1,1-GPM, 1,6-GPS, 1,1-GPS, Mannit, Sorbit, Desoxy-Disaccharidalkohole, GPI und Glucosylglycitole aufweist, das heißt aus diesen Komponenten besteht und demgemäß keine weiteren Stoffe oder Stoffgemische aufweist.

Die erfindungsgemäße geringere Verfärbung, also höhere Farbstabilität, der Isomalt-Zusammensetzung bleibt überraschenderweise über einen langen Zeitraum erhalten, insbesondere bei der Lagerung der flüssigen Isomalt-Zusammensetzung, insbesondere wird keine oder kaum eine Verfärbung, insbesondere eine signifikant geringere Verfärbung im Vergleich zu anderen Isomalt-Zusammensetzungen, beobachtet. Überraschenderweise zeigt die erfindungsgemäße flüssige Isomalt-Zusammensetzung keine oder kaum eine Verfärbung unter Lichteintrag, insbesondere UV-Licht, und bei erhöhter Temperatur. Die erfindungsgemäße Isomalt-Zusammensetzung zeigt also eine höhere Lagerstabilität, insbesondere unter Lichteintrag und erhöhter Temperatur, insbesondere bei Lagerung bei einer Temperatur von 10 bis 90 °C, bevorzugt 20 bis 90 °C, bevorzugt 30 bis 90 °C, bevorzugt 40 bis 90 °C, bevorzugt 50 bis 90 °C, bevorzugt 60 bis 90 °C.

Die geringere Verfärbung einer erfindungsgemäßen flüssigen Isomalt-Zusammensetzung ermöglicht in vorteilhafter Weise eine längere Haltbarkeit derartiger Zusammensetzungen und diese Zusammensetzungen enthaltender Produkte. Überraschenderweise neigt eine erfindungsgemäße flüssige Isomalt-Zusammensetzung weniger zur Färbung. Überraschenderweise weist eine erfindungsgemäße flüssige Isomalt-Zusammensetzung eine geringere Färbung, insbesondere eine geringere Verfärbung auf, insbesondere bei Lagerung der flüssigen Isomalt-Zusammensetzung auch über einen längeren Zeitraum, zum Beispiel von mehr als 2 Wochen, von mehr als 3 Wochen, insbesondere von mehr als 12 Wochen. Die Haltbarkeit einer erfindungsmäßigen flüssigen Isomalt-Zusammensetzung ist überraschenderweise erhöht.

Im Zusammenhang mit der vorliegenden Erfindung wird unter dem Begriff "Verfärbung" eine sichtbare oder in einer optischen Art und Weise messbare Färbung einer Zusammensetzung verstanden, insbesondere eine Änderung der Färbung einer Zusammensetzung im Vergleich zu deren ursprünglichen Färbung.

Im Zusammenhang mit der vorliegenden Erfindung wird unter dem Begriff "Farbstabilität" keine oder kaum eine sichtbare oder in einer optischen Art und Weise messbare Färbung, insbesondere eine Änderung der Färbung, einer Zusammensetzung verstanden.

Die Färbung kann als Farbe in Lösung gemessen werden. Unter der Farbe in Lösung wird die photometrisch ermittelte Extinktion einer filtrierten Lösung, umgerechnet in ICUMSA-Einheiten, verstanden (angelehnt an ICUMSA Methode: GS2/3-9). Die Messung erfolgt in einem Spektralphotometer, bevorzugt einem Zweistrahlphotometer, bei einer Wellenlänge von 420 nm.

Die photometrische Messung der Extinktion kann dabei in einem Konzentrationsbereich der flüssigen Probe zwischen 5g TS/100mL Wasser - 40g TS/100mL Wasser erfolgen (TS: Trockensubstanz). Bei konzentrierten Proben erfolgt eine Verdünnung der Probe mit vollentsalztem und über einen Filter mit Porengröße 0,45 $\mu$m filtriertem Wasser. Vorzugsweise erfolgt eine 1:1 Verdünnung der konzentrierten Probe.

Eine Isomalt-Lösung mit einem Anfangswert der Farbe in Lösung von < 10 ICUMSA-Einheiten ist im Sinne der Erfindung dann farbstabil, wenn bei einer Lagertemperatur von 85°C bei einem TS-Gehalt von 75% nach einer Lagerzeit von 21 Tagen die Farbe in Lösung (photometrische ermittelte Extinktion umgerechnet in ICUMSA Einheiten) unterhalb von 30 ICUMSA Einheiten liegt.

Durch Verdünnen mit vollentsalztem Wasser wird eine Probenlösung mit einem Trockensubstanzgehalt (refraktometrisch) von 20% eingestellt. Die erhaltene Lösung wird in eine Einmalspritze gegeben und über einen Spritzenvorsatzfilter (Sartorius Minisart®, 0,45 $\mu$m) in eine Küvette aus optischem Glas (Durchlässigkeit ab 360 nm, Schichtdicke 5 cm mit Deckel) filtriert, wobei die ersten 5 mL verworfen werden. Die Küvette wird abgedeckt und 15 min stehen gelassen. Anschließend wird in einem Spektralphotometer (z.B. von Hitachi, z.B. Hitachi U 2000, U 2001) die Extinktion ($E_{420}$) dieser Lösung bei 420 nm gegen eine mit Wasser gefüllte Vergleichsküvette gemessen. Die Farbe in Lösung in ICUMSA Einheiten $F_{IE}$ ergibt sich durch Berechnung:

$$F_{IE} = 1000 \text{ x } \varepsilon_{420} = 1000 \text{ x } E_{420} / (d \text{ x } c)$$

$\varepsilon_{420}$ = Extinktionskoeffizient (bei 420 nm)

$E_{420}$ = Extinktion (bei 420 nm)
d = Schichtdicke der Küvette (5 cm)
c = Konzentration (g/mL) = $\rho_{20\%}$ x (TS/100)
TS = Trockensubstanzgehalt (g/100g, eingestellt auf 20 g/100g)
$\rho_{20\%}$ = 1,081 (Dichte einer 20,0%-igen Messlösung)

Die Filtration kann durch Vakuum-Filtration oder mit Spritzenvorsatzfilter erfolgen. Bei der Vakuum-Filtration wird eine Vakuumfiltriereinrichtung verwendet, z.B. Witt'scher Topf, Becherglas, Edelstahlfritte mit angefeuchtetem Membranfilter mit mittlerem Porendurchmesser von 0,45 μm (z.B. Cellulose-Nitrat-Membranfilter, Fa. Sartorius). Der Spritzenvorsatzfilter weist bevorzugt eine Porengröße 0,45 μm auf (z.B. Cellulose Acetat-Membranfilter, Minisart®, Sartorius).

In Zusammenhang mit der vorliegenden Erfindung wird unter einer Isomalt-Zusammensetzung eine 1,1-GPM und 1,6-GPS aufweisende Zusammensetzung verstanden.

Im Zusammenhang mit der vorliegenden Erfindung wird unter einer erfindungsgemäßen Isomalt-Zusammensetzung ein Gemisch verstanden, welches 1,1-GPM (1-O-alpha-D-glucopyranosyl-D-mannitol), 1,6-GPS (6-O-alpha-D-glucopyranosyl-D-sorbitol) und die glycosylierten Isomalt-Komponenten 6'-g-1,1-GPM, 6'-g-1,6-GPS, 1-g-1,6-GPS und 6-g-1,1-GPM aufweist, wobei das Gewichtsverhältnis von 6'-g-1,1-GPM : 6'-g-1,6-GPS : 1-g-1,6-GPS : 6-g-1,1-GPM in der flüssigen Isomalt-Zusammensetzung 1:(0,7-1,3):(0,3-1,1):(1-2) beträgt (jeweils bezogen auf Gew.-% und Trockensubstanz (TS) der glycosylierten Isomalt-Komponenten). In einer bevorzugten Ausführungsform kann die Isomalt-Zusammensetzung zudem weitere Komponenten wie 1,1-GPS (1-O-alpha-D-glucopyranosyl-D-sorbitol), Desoxy-Disaccharidalkohole, Glucosylglycitole, GPI, Mannit, Sorbit und/oder weitere in geringen Mengen auftretende Komponenten aufweisen.

Die erfindungsgemäße flüssige Isomalt-Zusammensetzung weist ein Gewichtsverhältnis von 6'-g-1,1-GPM : 6'-g-1,6-GPS : 1-g-1,6-GPS : 6-g-1,1-GPM von 1 : (0,7-1,3) : (0,3-1,1) : (1,0-2,0) auf, bevorzugt von 1: (0,7-1,2) : (0,5-1,0) : (1,1-1,9), bevorzugt von 1 : (0,7-1,0) : (0,6-1,0) : (1,3-1,9), bevorzugt von 1 : (0,8-1,0) : (0,7-1,0) : (1,2-1,8), bevorzugt von 1 : (0,8-1,0) : (0,8-1,0) : (1,4-1,8), bevorzugt von 1 : (0,9-1,1) : (0,9-1,1) : (1,4-1,8), bevorzugt von 1 : (0,9-1,1) : (1,1-1,4) : (1,8-2,2), oder bevorzugt von 1 : (0,9-1,1) : (0,2-0,5) : (1-1,2), jeweils bezogen auf Gew.-% und Trockensubstanz (TS) der glycosylierten Isomalt-Komponenten.

Im Zusammenhang mit der vorliegenden Erfindung addieren, soweit nicht anders angegeben und/oder erkenntlich, die für eine Zusammensetzung von Komponenten angegebenen prozentualen Anteile einzelner Komponenten auf 100 Gew.-% der Trockensubstanz (TS) der flüssigen Zusammensetzung auf.

Die erfindungsgemäßen Zusammensetzungen weisen neben 1,1-GPM, 1,6-GPS und den glycosylierten Isomalt-Komponenten zumindest ein Lösungsmittel auf, bevorzugt Wasser, einen Alkohol oder ein Gemisch davon, insbesondere bevorzugt Wasser.

In einer bevorzugten Ausführungsform weist die erfindungsgemäße flüssige Isomalt-Zusammensetzung mindestens 1 Gew.-% Trockensubstanzgehalt (TS) auf, bevorzugt mindestens 2 Gew.-%, bevorzugt mindestens 5 Gew.-%, bevorzugt mindestens 10 Gew.-%, bevorzugt mindestens 20 Gew.-%, bevorzugt mindestens 30 Gew.-%, bevorzugt mindestens 40 Gew.-%, bevorzugt mindestens 50 Gew.-%, bevorzugt mindestens 60 Gew.-%, bevorzugt mindestens 70 Gew.-%, bevorzugt mindestens 75 Gew.-%, bevorzugt mindestens 80 Gew.-%, bevorzugt mindestens 85 Gew.-%, bevorzugt mindestens 90 Gew.-%, bevorzugt 5 bis 80 Gew.-%, bevorzugt 5 bis 70 Gew.-%, bevorzugt 5 bis 60 Gew.-%, bevorzugt 5 bis 50 Gew.-%, bevorzugt 5 bis 40 Gew.-%, bevorzugt 10 bis 80 Gew.-%, bevorzugt 10 bis 70 Gew.-%, bevorzugt 10 bis 60 Gew.-%, bevorzugt 10 bis 50 Gew.-%, bevorzugt 10 bis 40 Gew.-%, bevorzugt 20 bis 80 Gew.-%, bevorzugt 20 bis 70 Gew.-%, bevorzugt 20 bis 60 Gew.-%, bevorzugt 20 bis 50 Gew.-%, bevorzugt 30 bis 80 Gew.-%, bevorzugt 30 bis 70 Gew.-%, bevorzugt 40 bis 70 Gew.-%, bevorzugt 30 bis 60 Gew.-%, oder bevorzugt 40 bis 60 Gew.-%, jeweils basierend auf dem Gesamtgewicht der flüssigen Isomalt-Zusammensetzung.

In einer bevorzugten Ausführungsform liegt die erfindungsgemäße flüssige Isomalt-Zusammensetzung bei einer Temperatur von 5 bis 90 °C vor, bevorzugt 10 bis 90 °C, bevorzugt 20 bis 90 °C, bevorzugt 30 bis 90 °C, bevorzugt 5 bis 80 °C, bevorzugt 10 bis 80 °C, bevorzugt 20 bis 80 °C, bevorzugt 30 bis 80 °C, bevorzugt 5 bis 70 °C, bevorzugt 10 bis 70 °C, bevorzugt 20 bis 70 °C, bevorzugt 30 bis 70 °C, bevorzugt 5 bis 60 °C, bevorzugt 10 bis 60 °C, bevorzugt 20 bis 60 °C, bevorzugt 30 bis 60 °C, bevorzugt 5 bis 50 °C, bevorzugt 10 bis 50 °C, bevorzugt 20 bis 50 °C, bevorzugt 30 bis 50 °C, bevorzugt 5 bis 40 °C, bevorzugt 10 bis 40 °C, bevorzugt 20 bis 40 °C, bevorzugt 30 bis 40 °C, bevorzugt 5 bis 30 °C, bevorzugt 10 bis 30 °C, oder bevorzugt 20 bis 30 °C.

In einer bevorzugten Ausführungsform weist die erfindungsgemäße flüssige Isomalt-Zusammensetzung einen pH-Wert von 5 bis 9 auf, bevorzugt von 5 bis 8, bevorzugt von 5 bis 7, bevorzugt von 6 bis 9, bevorzugt von 7 bis 9, bevorzugt von 6 bis 8, oder bevorzugt von 6,5 bis 7,5.

In einer besonders bevorzugten Ausführungsform weist die erfindungsgemäße flüssige Isomalt-Zusammensetzung neben dem mindestens einen Lösungsmittel, insbesondere Wasser, allein die glycosylierten Isomalt-Komponenten und 1,1-GPM und 1,6-GPS auf.

In einer besonders bevorzugten Ausführungsform weist die erfindungsgemäße flüssige Isomalt-Zusammensetzung neben dem mindestens einen Lösungsmittel, insbesondere Wasser, allein die glycosylierten Isomalt-Komponenten, 1,1-GPM und 1,6-GPS, bevorzugt zusätzlich auch 1,1-GPS, Mannit, Sorbit, Desoxy-Disaccharidalkohole, GPI und/oder Glucosylglycitole auf.

In einer besonders bevorzugten Ausführungsform weist die erfindungsgemäße flüssige Isomalt-Zusammensetzung neben den glycosylierten Isomalt-Komponenten ein Gemisch von 1,6-GPS und 1,1-GPM in einem Verhältnis von 43 bis 57 Gew.-% 1,6-GPS und 57 bis 43 Gew.-% 1,1-GPM (jeweils bezogen auf Trockensubstanz (TS) der Gesamtmenge an 1,6-GPS und 1,1-GPM). In einer weiteren bevorzugten Ausführungsform weist die erfindungsgemäße flüssige Isomalt-Zusammensetzung ein Gemisch aus 1,6-GPS und 1,1-GPM in einer 1,1-GPM-angereicherten Form auf, insbesondere einer solchen, in der mehr als 57, bevorzugt 57,1, oder bevorzugt 57,2 bis 99 Gew.-% 1,1-GPM und weniger als 43, bevorzugt 42,9, oder bevorzugt 42,8 bis 1 Gew.-% 1,6-GPS vorliegen (jeweils bezogen auf Trockensubstanz (TS) der Gesamtmenge an 1,6-GPS und 1,1-GPM). In einer weiteren bevorzugten Ausführungsform weist die erfindungsgemäße flüssige Isomalt-Zusammensetzung ein Gemisch aus 1,6-GPS und 1,1-GPM in einer 1,6-GPSangereicherten Form auf, insbesondere einer solchen, in der mehr als 57, bevorzugt 57,1, oder bevorzugt 57,2 bis 99 Gew.-% 1,6-GPS und weniger als 43, bevorzugt 42,9, oder bevorzugt 42,8 bis 1 Gew.-% 1,1-GPM vorliegen, insbesondere weist das Gemisch 75 bis 80 Gew.-% 1,6-GPS und 25 bis 20 Gew.-% 1,1-GPM (jeweils bezogen auf Trockensubstanz (TS) der Gesamtmenge an 1,6-GPS und 1,1-GPM).

In einer bevorzugten Ausführungsform weist die erfindungsgemäße flüssige Isomalt-Zusammensetzung mindestens 70 Gew.-% 1,6-GPS und 1,1-GPM auf, bevorzugt mindestens 80 Gew.-%, bevorzugt mindestens 82 Gew.-%, bevorzugt mindestens 84 Gew.-%, bevorzugt mindestens 86 Gew.-%, bevorzugt mindestens 88 Gew.-%, bevorzugt mindestens 90 Gew.-%, bevorzugt mindestens 92 Gew.-%, bevorzugt mindestens 94 Gew.-%, bevorzugt mindestens 96 Gew.-%, oder bevorzugt mindestens 98 Gew.-%, jeweils basierend auf dem Gesamtgewicht (TS) der flüssigen Isomalt-Zusammensetzung, wobei in besonders bevorzugter Ausführungsform dieses Gemisch 1,6-GPS und 1,1-GPM in den vorstehend offenbarten Mengenverhältnissen zueinander aufweist.

In einer bevorzugten Ausführungsform weist die erfindungsgemäße flüssige Isomalt-Zusammensetzung mindestens 30 Gew.-% 1,6-GPS auf, bevorzugt mindestens 35 Gew.-%, bevorzugt mindestens, 40 Gew.-%, bevorzugt mindestens 45 Gew.-%, bevorzugt mindestens 50 Gew.-%, bevorzugt mindestens 55 Gew.-%, bevorzugt mindestens 60 Gew.-%, bevorzugt mindestens 65 Gew.-%, bevorzugt mindestens 70 Gew.-%, bevorzugt mindestens 75 Gew.-%, bevorzugt höchstens 90 Gew.-%, bevorzugt höchstens 80 Gew.-%, bevorzugt höchstens 70 Gew.-%, bevorzugt höchstens 60 Gew.-%, bevorzugt 40 bis 90 Gew.-%, bevorzugt 50 bis 90 Gew.-%, bevorzugt 60 bis 90 Gew.-%, bevorzugt 30 bis 80 Gew.-%, bevorzugt 40 bis 80 Gew.-%, oder bevorzugt 50 bis 80 Gew.-%, jeweils basierend auf dem Gesamtgewicht (TS) der flüssigen Isomalt-Zusammensetzung.

In einer bevorzugten Ausführungsform weist die erfindungsgemäße flüssige Isomalt-Zusammensetzung mindestens 15 Gew.-% 1,1-GPM auf, bevorzugt mindestens 20 Gew.-%, bevorzugt mindestens 25 Gew.-%, bevorzugt mindestens 30 Gew.-%, bevorzugt mindestens 35 Gew.-%, bevorzugt mindestens 40 Gew.-%, bevorzugt mindestens 45 Gew.-%, bevorzugt mindestens 50 Gew.-%, bevorzugt mindestens 55 Gew.-%, bevorzugt mindestens 60 Gew.-%, bevorzugt mindestens 65 Gew.-%, bevorzugt höchstens 60 Gew.-%, bevorzugt höchstens 50 Gew.-%, bevorzugt höchstens 55 Gew.-%, bevorzugt höchstens 45 Gew.-%, bevorzugt höchstens 40 Gew.-%, bevorzugt höchstens 35 Gew.-%, bevorzugt höchstens 30 Gew.-%, bevorzugt höchstens 25 Gew.-%, bevorzugt 10 bis 60 Gew.-%, bevorzugt 20 bis 60 Gew.-%, bevorzugt 20 bis 50 Gew.-%, bevorzugt 20 bis 40 Gew.-%, bevorzugt 10 bis 50 Gew.-%, bevorzugt 10 bis 40 Gew.-%, oder bevorzugt 10 bis 30 Gew.-%, jeweils basierend auf dem Gesamtgewicht (TS) der flüssigen Isomalt-Zusammensetzung.

In einer bevorzugten Ausführungsform weist die erfindungsgemäße flüssige Isomalt-Zusammensetzung neben dem mindestens einen Lösungsmittel die Komponenten 1,6-GPS, 1,1-GPM, 6'-g-1,1-GPM, 6'-g-1,6-GPS, 1-g-1,6-GPS und 6-g-1,1-GPM und mindestens eine weitere Komponente ausgewählt aus der Gruppe bestehend aus 1,1-GPS, Desoxy-Disaccharidalkoholen, GPI (Glucopyranosyl-idit), Glucosylglycitolen, Mannit und Sorbit auf, insbesondere besteht aus diesen.

In einer besonders bevorzugten Ausführungsform weist die erfindungsgemäße flüssige Isomalt-Zusammensetzung neben dem mindestens einen Lösungsmittel die Komponenten, 1,6-GPS, 1,1-GPM, 6'-g-1,1-GPM, 6'-g-1,6-GPS, 1-g-1,6-GPS und 6-g-1,1-GPM auf, insbesondere besteht aus diesen.

In einer bevorzugten Ausführungsform weist die erfindungsgemäße flüssige Isomalt-Zusammensetzung 0,01 bis 1 Gew.-% 6'-g-1,1-GPM auf, bevorzugt 0,01 bis 0,6 Gew.-%, bevorzugt 0,01 bis 0,4 Gew.-%, bevorzugt 0,01 bis 0,3 Gew.-%, bevorzugt 0,01 bis 0,2 Gew.-%, bevorzugt 0,01 bis 0,16 Gew.-%, bevorzugt 0,01 bis 0,14 Gew.-%, bevorzugt 0,01 bis 0,12 Gew.-%, bevorzugt 0,01 bis 0,1 Gew.-%, bevorzugt 0,01 bis 0,08 Gew.-%, bevorzugt 0,03 bis 1 Gew.-%, bevorzugt 0,03 bis 0,6 Gew.-%, bevorzugt 0,03 bis 0,4 Gew.-%, bevorzugt 0,03 bis 0,3 Gew.-%, bevorzugt 0,03 bis 0,2 Gew.-%, oder bevorzugt 0,03 bis 0,1 Gew.-%, basierend auf dem Gesamtgewicht (TS) der flüssigen Isomalt-Zusammensetzung.

In einer bevorzugten Ausführungsform weist die erfindungsgemäße flüssige Isomalt-Zusammensetzung 0,01 bis 1 Gew.-% 6'-g-1,6-GPS auf, bevorzugt 0,01 bis 0,6 Gew.-%, bevorzugt 0,01 bis 0,4 Gew.-%, bevorzugt 0,01 bis 0,3 Gew.-%, bevorzugt 0,01 bis 0,2 Gew.-%, bevorzugt 0,01 bis 0,16 Gew.-%, bevorzugt 0,01 bis 0,14 Gew.-%, bevorzugt 0,01 bis 0,12 Gew.-%, bevorzugt 0,01 bis 0,1 Gew.-%, bevorzugt 0,01 bis 0,08 Gew.-%, bevorzugt 0,03 bis 1 Gew.-%, bevorzugt 0,03 bis 0,6 Gew.-%, bevorzugt 0,03 bis 0,4 Gew.-%, bevorzugt 0,03 bis 0,3 Gew.-%, bevorzugt 0,03 bis 0,2 Gew.-%, oder bevorzugt 0,03 bis 0,1 Gew.-%, jeweils basierend auf dem Gesamtgewicht (TS) der flüssigen Isomalt-Zusammensetzung.

In einer bevorzugten Ausführungsform weist die erfindungsgemäße flüssige Isomalt-Zusammensetzung 0,01 bis 1 Gew.-% 1-g-1,6-GPS, bevorzugt 0,01 bis 0,6 Gew.-%, bevorzugt 0,01 bis 0,4 Gew.-%, bevorzugt 0,01 bis 0,3 Gew.-%, bevorzugt 0,01 bis 0,2 Gew.-%, bevorzugt 0,01 bis 0,16 Gew.-%, bevorzugt 0,01 bis 0,14 Gew.-%, bevorzugt 0,01 bis 0,12 Gew.-%, bevorzugt 0,01 bis 0,1 Gew.-%, bevorzugt 0,01 bis 0,08 Gew.-%, bevorzugt 0,03 bis 1 Gew.-%, bevorzugt 0,03 bis 0,6 Gew.-%, bevorzugt 0,03 bis 0,4 Gew.-%, bevorzugt 0,03 bis 0,3 Gew.-%, bevorzugt 0,03 bis 0,2 Gew.-%, oder bevorzugt 0,03 bis 0,1 Gew.-%, jeweils basierend auf dem Gesamtgewicht (TS) der flüssigen Isomalt-Zusammensetzung.

In einer bevorzugten Ausführungsform weist die erfindungsgemäße flüssige Isomalt-Zusammensetzung 0,01 bis 2 Gew.-% 6-g-1,1-GPM auf, bevorzugt von 0,01 bis 1,8 Gew.-%, bevorzugt von 0,02 bis 1,6 Gew.-%, bevorzugt von 0,03 bis 1,4 Gew.-%, bevorzugt 0,01 bis 1,6 Gew.-%, bevorzugt 0,01 bis 1,4 Gew.-%, bevorzugt 0,01 bis 1,2 Gew.-%, bevorzugt 0,01 bis 1 Gew.-%, bevorzugt 0,01 bis 0,6 Gew.-%, bevorzugt 0,01 bis 0,4 Gew.-%, bevorzugt 0,01 bis 0,3 Gew.-%, bevorzugt 0,01 bis 0,2 Gew.-%, bevorzugt 0,01 bis 0,16 Gew.-%, bevorzugt 0,01 bis 0,14 Gew.-%, bevorzugt 0,01 bis 0,12 Gew.-%, bevorzugt 0,01 bis 0,1 Gew.-%, bevorzugt 0,01 bis 0,08 Gew.-%, bevorzugt 0,03 bis 1 Gew.-%, bevorzugt 0,03 bis 0,6 Gew.-%, bevorzugt 0,03 bis 0,4 Gew.-%, bevorzugt 0,03 bis 0,3 Gew.-%, bevorzugt 0,03 bis 0,2 Gew.-%, oder bevorzugt 0,03 bis 0,1 Gew.-%, jeweils basierend auf dem Gesamtgewicht (TS) der flüssigen Isomalt-Zusammensetzung.

In einer bevorzugten Ausführungsform weist die erfindungsgemäße flüssige Isomalt-Zusammensetzung 97,5 bis 99,5 Gew.-% 1,6-GPS und 1,1-GPM und 0,06 bis 0,9 Gew.-% der glycosylierten Isomalt-Komponenten 6'-g-1,1-GPM, 6'-g-1,6-GPS, 1-g-1,6-GPS und 6-g-1,1-GPM auf, bevorzugt 97,7 bis 99,3 Gew.-% 1,6-GPS und 1,1-GPM und 0,08 bis 0,8 Gew.-% der glycosylierten Isomalt-Komponenten, oder bevorzugt 97,9 bis 99,1 Gew.-% 1,6-GPS und 1,1-GPM und 0,1 bis 0,7 Gew.-% der glycosylierten Isomalt-Komponenten, jeweils basierend auf dem Gesamtgewicht (TS) der flüssigen Isomalt-Zusammensetzung.

In einer bevorzugten Ausführungsform weist die erfindungsgemäße flüssige Isomalt-Zusammensetzung 97,5 bis 99,5 Gew.-% 1,6-GPS und 1,1-GPM, 0,01 bis 0,2 Gew.-% 6'-g-1,1-GPM, 0,01 bis 0,2 Gew.-% 6'-g-1,6-GPS, 0,01 bis 0,2 Gew.-% 1-g-1,6-GPS und 0,01 bis 0,4 Gew.-% 6-g-1,1-GPM auf, bevorzugt 97,7 bis 99,3 Gew.-% 1,6-GPS und 1,1-GPM, 0,02 bis 0,18 Gew.-% 6'-g-1,1-GPM, 0,02 bis 0,18 Gew.-% 6'-g-1,6-GPS, 0,02 bis 0,18 Gew.-% 1-g-1,6-GPS und 0,02 bis 0,34 Gew.-% 6-g-1,1-GPM, oder bevorzugt 97,9 bis 99,1 Gew.-% 1,6-GPS und 1,1-GPM, 0,03 bis 1,6 Gew.-% 6'-g-1,1-GPM, 0,03 bis 1,6 Gew.-% 6'-g-1,6-GPS, 0,03 bis 1,6 Gew.-% 1-g-1,6-GPS und 0,04 bis 0,28 Gew.-% 6-g-1,1-GPM, jeweils basierend auf dem Gesamtgewicht (TS) der flüssigen Isomalt-Zusammensetzung.

In einer bevorzugten Ausführungsform weist die erfindungsgemäße flüssige Isomalt-Zusammensetzung 40 bis 89 Gew.-% 1,6-GPS, 10 bis 59 Gew.-% 1,1-GPM und 0,06 bis 0,9 Gew.-% der glycosylierten Isomalt-Komponenten 6'-g-1,1-GPM, 6'-g-1,6-GPS, 1-g-1,6-GPS und 6-g-1,1-GPM auf, bevorzugt 40 bis 79 Gew.-% Gew.-% 1,6-GPS, 20 bis 59 Gew.-% 1,1-GPM und 0,08 bis 0,8 Gew.-% der glycosylierten Isomalt-Komponenten, oder bevorzugt 50 bis 79 Gew.-% Gew.-% 1,6-GPS, 20 bis 49 Gew.-% 1,1-GPM und 0,1 bis 0,7 Gew.-% der glycosylierten Isomalt-Komponenten, jeweils basierend auf dem Gesamtgewicht (TS) der flüssigen Isomalt-Zusammensetzung.

In einer bevorzugten Ausführungsform weist die erfindungsgemäße flüssige Isomalt-Zusammensetzung neben dem mindestens einen Lösungsmittel die Komponenten 1,6-GPS, 1,1-GPM, 6'-g-1,1-GPM, 6'-g-16-GPS, 1-g-1,6-GPS, 6-g-1,1-GPM und 1,1-GPS (1-O-alpha-D-glucopyranosyl-D-sorbitol) auf, insbesondere besteht aus diesen.

In einer bevorzugten Ausführungsform weist die erfindungsgemäße flüssige Isomalt-Zusammensetzung 0,1 bis 10 Gew.-% 1,1-GPS auf, bevorzugt 0,1 bis 8 Gew.-%, bevorzugt 0,1 bis 6 Gew.-%, bevorzugt 0,1 bis 5 Gew.-%, bevorzugt 0,1 bis 4 Gew.-%, bevorzugt 0,1 bis 3 Gew.-%, bevorzugt 0,1 bis 2 Gew.-%, bevorzugt 0,1 bis 1 Gew.-%, bevorzugt 0,1 bis 0,8 Gew.-%, bevorzugt 0,1 bis 0,6 Gew.-%, bevorzugt 0,1 bis 0,4 Gew.-%, bevorzugt 0,2 bis 10 Gew.-%, bevorzugt 0,2 bis 8 Gew.-%, bevorzugt 0,2 bis 6 Gew.-%, bevorzugt 0,2 bis 5 Gew.-%, bevorzugt 0,2 bis 4 Gew.-%, bevorzugt 0,2 bis 3 Gew.-%, bevorzugt 0,2 bis 2 Gew.-%, bevorzugt 0,2 bis 1 Gew.-%, bevorzugt 0,2 bis 0,8 Gew.-%, bevorzugt 0,2 bis 0,6 Gew.-%, bevorzugt 0,2 bis 0,4 Gew.-%, bevorzugt 0,5 bis 10 Gew.-%, bevorzugt 0,5 bis 8 Gew.-%, bevorzugt 0,5 bis 6 Gew.-%, bevorzugt 0,5 bis 5 Gew.-%, bevorzugt 0,5 bis 4 Gew.-%, bevorzugt 0,5 bis 3 Gew.-%, bevorzugt 0,5 bis 2 Gew.-%, bevorzugt 0,5 bis 1 Gew.-%, bevorzugt 0,5 bis 0,8 Gew.-%, bevorzugt 1 bis 10 Gew.-%, bevorzugt 1 bis 8 Gew.-%, bevorzugt 1 bis 6 Gew.-%, bevorzugt 1 bis 5 Gew.-%, bevorzugt 1 bis 4 Gew.-%, bevorzugt 1 bis 3 Gew.-%, oder bevorzugt 1 bis 2 Gew.-%, jeweils basierend auf dem Gesamtgewicht (TS) der flüssigen Isomalt-Zusammensetzung.

In einer besonders bevorzugten Ausführungsform enthält die erfindungsgemäße flüssige Isomalt-Zusammensetzung kein 1,1-GPS.

In einer bevorzugten Ausführungsform weist die erfindungsgemäße flüssige Isomalt-Zusammensetzung neben dem mindestens einen Lösungsmittel die Komponenten 1,6-GPS, 1,1-GPM, 6'-g-1,1-GPM, 6'-g-1,6-GPS, 1-g-1,6-GPS, 6-g-1,1-GPM und Desoxy-Disaccharidalkohole auf, insbesondere besteht aus diesen.

In einer bevorzugten Ausführungsform weist die erfindungsgemäße flüssige Isomalt-Zusammensetzung 0,01 bis 2 Gew.-% Desoxy-Disaccharidalkohole auf, bevorzugt 0,01 bis 1 Gew.-%, bevorzugt 0,01 bis 0,8 Gew.-%, bevorzugt 0,01 bis 0,6 Gew.-%, bevorzugt 0,01 bis 0,4 Gew.-%, bevorzugt 0,01 bis 0,2 Gew.-%, bevorzugt 0,01 bis 0,5 Gew.-%, bevorzugt 0,01 bis 0,1 Gew.-%, 0,03 bis 1,0 Gew.-%, bevorzugt 0,03 bis 0,8 Gew.-%, bevorzugt 0,03 bis 0,6 Gew.-%, bevorzugt 0,03 bis 0,4 Gew.-%, bevorzugt 0,03 bis 0,2 Gew.-%, bevorzugt 0,03 bis 0,5 Gew.-%, bevorzugt 0,03 bis 0,1 Gew.-%, bevorzugt 0,1 bis 1 Gew.-%, bevorzugt 0,1 bis 2 Gew.-%, bevorzugt 0,1 bis 4 Gew.-%, bevorzugt 0,1 bis 8 Gew.-%, bevorzugt 0,2 bis 2 Gew.-%, bevorzugt 0,4 bis 1 Gew.-%, oder bevorzugt 0,4 bis 2 Gew.-%, jeweils basierend auf dem Gesamtgewicht (TS) der flüssigen Isomalt-Zusammensetzung.

In einer besonders bevorzugten Ausführungsform enthält die erfindungsgemäße flüssige Isomalt-Zusammensetzung keine Desoxy-Disaccharidalkohole.

In einer bevorzugten Ausführungsform weist die erfindungsgemäße flüssige Isomalt-Zusammensetzung neben dem mindestens einen Lösungsmittel die Komponenten 1,6-GPS, 1,1-GPM, 6'-g-1,1-GPM, 6'-g-1,6-GPS, 1-g-1,6-GPS, 6-g-1,1-GPM und Glucosylglycitole auf, insbesondere besteht aus diesen.

In einer bevorzugten Ausführungsform weist die erfindungsgemäße flüssige Isomalt-Zusammensetzung 0,01 bis 2 Gew.-% Glucosylglycitole auf, bevorzugt 0,01 bis 1 Gew.-%, bevorzugt 0,01 bis 0,8 Gew.-%, bevorzugt 0,01 bis 0,6 Gew.-%, bevorzugt 0,01 bis 0,5 Gew.-%, bevorzugt 0,01 bis 0,4 Gew.-%, bevorzugt 0,01 bis 0,2 Gew.-%, bevorzugt 0,01 bis 0,1 Gew.-%, 0,03 bis 1,0 Gew.-%, bevorzugt 0,03 bis 2,0 Gew.-%, bevorzugt 0,03 bis 0,8 Gew.-%, bevorzugt 0,03 bis 0,6 Gew.-%, bevorzugt 0,03 bis 0,5 Gew.-%, bevorzugt 0,03 bis 0,4 Gew.-%, bevorzugt 0,03 bis 0,2 Gew.-%, bevorzugt 0,03 bis 0,1 Gew.-%, bevorzugt 0,04 bis 1,0 Gew.-%, bevorzugt 0,04 bis 2,0 Gew.-%, bevorzugt 0,04 bis 0,8 Gew.-%, bevorzugt 0,04 bis 0,6 Gew.-%, bevorzugt 0,04 bis 0,5 Gew.-%, bevorzugt 0,04 bis 0,4 Gew.-%, bevorzugt 0,04 bis 0,2 Gew.-%, bevorzugt 0,04 bis 0,1 Gew.-%, bevorzugt 0,1 bis 0,4 Gew.-%, bevorzugt 0,1 bis 0,6 Gew.-%, bevorzugt 0,1 bis 0,8 Gew.-%, bevorzugt 0,1 bis 1 Gew.-%, bevorzugt 0,1 bis 2 Gew.-%, bevorzugt 0,1 bis 4 Gew.-%, bevorzugt 0,1 bis 8 Gew.-%, bevorzugt 0,2 bis 2 Gew.-%, bevorzugt 0,4 bis 2 Gew.-%, oder bevorzugt 0,4 bis 1 Gew.-%, jeweils basierend auf dem Gesamtgewicht (TS) der flüssigen Isomalt-Zusammensetzung.

In einer besonders bevorzugten Ausführungsform enthält die erfindungsgemäße flüssige Isomalt-Zusammensetzung keine Glucosylglycitole.

In einer bevorzugten Ausführungsform weist die erfindungsgemäße flüssige Isomalt-Zusammensetzung neben dem mindestens einen Lösungsmittel die Komponenten 1,6-GPS, 1,1-GPM, 6'-g-1,1-GPM, 6'-g-1,6-GPS, 1-g-1,6-GPS, 6-g-1,1-GPM und Mannit auf, insbesondere besteht aus diesen.

In einer bevorzugten Ausführungsform weist die erfindungsgemäße flüssige Isomalt-Zusammensetzung 0,01 bis 0,3 Gew.-% Mannit auf, bevorzugt 0,01 bis 0,2 Gew.-%, bevorzugt 0,01 bis 0,16 Gew.-%, bevorzugt 0,01 bis 0,12 Gew.-%, bevorzugt 0,01 bis 0,1 Gew.-%, bevorzugt 0,01 bis 0,08 Gew.-%, bevorzugt 0,01 bis 0,06 Gew.-%, bevorzugt 0,01 bis 0,04 Gew.-%, bevorzugt 0,02 bis 0,3 Gew.-%, bevorzugt 0,02 bis 0,2 Gew.-%, bevorzugt 0,02 bis 0,16 Gew.-%, bevorzugt 0,02 bis 0,1 Gew.-%, bevorzugt 0,02 bis 0,06 Gew.-%, bevorzugt 0,04 bis 0,16 Gew.-%, bevorzugt 0,04 bis 0,2 Gew.-%, bevorzugt 0,04 bis 0,1 Gew.-%, bevorzugt 0,04 bis 0,08 Gew.-%, bevorzugt 0,06 bis 0,2 Gew.-%, bevorzugt 0,06 bis 0,14 Gew.-%, bevorzugt 0,06 bis 0,1 Gew.-%, oder bevorzugt 0,06 bis 0,08 Gew.-%, jeweils basierend auf dem Gesamtgewicht (TS) der flüssigen Isomalt-Zusammensetzung.

In einer besonders bevorzugten Ausführungsform enthält die erfindungsgemäße flüssige Isomalt-Zusammensetzung kein Mannit.

In einer bevorzugten Ausführungsform weist die erfindungsgemäße flüssige Isomalt-Zusammensetzung neben dem mindestens einen Lösungsmittel die Komponenten 1,6-GPS, 1,1-GPM, 6'-g-1,1-GPM, 6'-g-1,6-GPS, 1-g-1,6-GPS, 6-g-1,1-GPM und Sorbit auf, insbesondere besteht aus diesen.

In einer bevorzugten Ausführungsform weist die erfindungsgemäße flüssige Isomalt-Zusammensetzung 0,01 bis 0,4 Gew.-% Sorbit auf, bevorzugt 0,01 bis 0,3 Gew.-%, bevorzugt 0,01 bis 0,24 Gew.-%, bevorzugt 0,01 bis 0,2 Gew.-%, bevorzugt 0,01 bis 0,1 Gew.-%, bevorzugt 0,01 bis 0,06 Gew.-%, bevorzugt 0,02 bis 0,3 Gew.-%, bevorzugt 0,02 bis 0,2 Gew.-%, bevorzugt 0,02 bis 0,1 Gew.-%, bevorzugt 0,02 bis 0,06 Gew.-%, bevorzugt 0,04 bis 0,3 Gew.-%, bevorzugt 0,04 bis 0,24 Gew.-%, bevorzugt 0,04 bis 0,2 Gew.-%, bevorzugt 0,04 bis 0,1 Gew.-%, bevorzugt 0,04 bis 0,08 Gew.-%, bevorzugt 0,06 bis 0,24 Gew.-%, bevorzugt 0,06 bis 0,2 Gew.-%, bevorzugt 0,06 bis 0,14 Gew.-%, bevorzugt 0,06 bis 0,1 Gew.-%, oder bevorzugt 0,06 bis 0,08 Gew.-%, jeweils basierend auf dem Gesamtgewicht (TS) der flüssigen Isomalt-Zusammensetzung.

In einer besonders bevorzugten Ausführungsform enthält die erfindungsgemäße flüssige Isomalt-Zusammensetzung kein Sorbit.

In einer bevorzugten Ausführungsform weist die erfindungsgemäße flüssige Isomalt-Zusammensetzung neben dem mindestens einen Lösungsmittel die Komponenten 1,6-GPS, 1,1-GPM, 6'-g-1,1-GPM, 6'-g-1,6-GPS, 1-g-1,6-GPS, 6-g-1,1-GPM und GPI (Glucopyranosyl-idit) auf, insbesondere besteht aus diesen.

In einer bevorzugten Ausführungsform weist die erfindungsgemäße flüssige Isomalt-Zusammensetzung 0,01 bis 0,2 Gew.-% GPI auf, bevorzugt 0,01 bis 0,16 Gew.-%, bevorzugt 0,01 bis 0,12 Gew.-%, bevorzugt 0,01 bis 0,1 Gew.-%, bevorzugt 0,01 bis 0,08 Gew.-%, bevorzugt 0,01 bis 0,06 Gew.-%, bevorzugt 0,01 bis 0,04 Gew.-%, bevorzugt 0,02 bis 0,3 Gew.-%, bevorzugt 0,02 bis 0,2 Gew.-%, bevorzugt 0,02 bis 0,16 Gew.-%, bevorzugt 0,02 bis 0,1 Gew.-%, bevorzugt 0,02 bis 0,06 Gew.-%, bevorzugt 0,04 bis 0,16 Gew.-%, bevorzugt 0,04 bis 0,2 Gew.-%, bevorzugt 0,04 bis 0,1 Gew.-%, bevorzugt 0,04 bis 0,08 Gew.-%, bevorzugt 0,06 bis 0,2 Gew.-%, bevorzugt 0,06 bis 0,14 Gew.-%, oder bevorzugt 0,06 bis 0,1 Gew.-%, jeweils basierend auf dem Gesamtgewicht (TS) der flüssigen Isomalt-Zusammensetzung.

In einer besonders bevorzugten Ausführungsform enthält die erfindungsgemäße flüssige Isomalt-Zusammensetzung kein GPI.

In einer bevorzugten Ausführungsform weist die erfindungsgemäße flüssige Isomalt-Zusammensetzung mindestens einen Süßkraftverstärker auf.

Im Zusammenhang mit der vorliegenden Erfindung wird unter einem Süßkraftverstärker eine Substanz verstanden, die im Unterschied zu Intensivsüßstoffen selbst keinen oder kaum süßen Geschmack, das heißt keine oder nur sehr geringe Eigensüße, aufweist, jedoch die Süße einer anderen süßen Substanz verstärken kann.

In einer bevorzugten Ausführungsform enthält die erfindungsgemäße flüssige Isomalt-Zusammensetzung keine Farbstoffe.

In einer besonders bevorzugten Ausführungsform ist die erfindungsgemäße flüssige Isomalt-Zusammensetzung farblos oder weitgehend farblos, weist also keine oder kaum eine durch die Komponenten der erfindungsgemäßen flüssigen Isomalt-Zusammensetzung erzeugte Farbe auf.

Die vorliegende Erfindung stellt auch die Verwendung der erfindungsgemäßen flüssigen Isomalt-Zusammensetzung in Produkten für den menschlichen und/oder tierischen Verzehr bereit, bevorzugt ist das Produkt für den menschlichen und/oder tierischen Verzehr ein Nahrungs- oder Genussmittel oder ein pharmazeutisches Produkt.

In einer bevorzugten Ausführungsform ist das Nahrungs- oder Genussmittel eine Süßware, eine Füllung für Süßwaren, eine Weichkaramelle, eine Hartkaramelle, ein Fondant, ein Joghurt, ein Gebäck, ein Kaugummi, eine Eiscreme, Milch, ein Milchprodukt, ein Getränk, ein isotonisches Getränk, ein Proteinshake, ein Fruchtsaft, ein Fruchtsaftkonzentrat, eine Fruchtzubereitung, eine Marmelade, ein Gelee oder ein Smoothie.

In einer bevorzugten Ausführungsform ist das pharmazeutische Produkt eine Pastille, eine Tablette, ein Komprimat, eine Lösung, ein Saft, eine Suspension, ein Sirup, ein Konzentrat, ein Dragee, eine Hart- oder Weichkaramelle, ein Spray, oder ein Inhalationsgemisch.

In einer besonders bevorzugten Ausführungsform wird die erfindungsgemäße flüssige Isomalt-Zusammensetzung zur Beschichtung von Nahrungs- oder Genussmitteln oder pharmazeutischen Produkten verwendet, insbesondere zur Beschichtung von Kaugummis.

In einer bevorzugten Ausführungsform weist das Nahrungs- oder Genussmittel mindestens 1, 2, 3, 4, 5, 6, 7, 8, 9, 10, 20, 30, 40, 50, 60, 70, 80, 90, 95, 98, insbesondere 99 Gew.-% der erfindungsgemäßen flüssigen Isomalt-Zusammensetzung auf, basierend auf dem Gesamtgewicht (TS) des Nahrungs- oder Genussmittels.

Die erfindungsgemäßen flüssigen Isomalt-Zusammensetzungen lassen sich beispielsweise herstellen, indem insbesondere die glycosylierten Isomalt-Komponenten jeweils einzeln mittels chromatographischer Verfahren aus herkömmlichen, an sich bekannten Isomalt-Zusammensetzungen isoliert werden, so wie beispielsweise in der EP 0 625 578 A1 beschrieben. Dieses Dokument ist hinsichtlich der Beschreibung der Herstellung einer dort als Süßungsmittel bezeichneten Isomalt-Zusammensetzung und deren Zusammensetzung vollinhaltlich in die Offenbarung der vorliegenden Erfindung mit einbezogen.

In bevorzugter Ausführungsform können die isolierten, separat vorliegenden glycosylierten Isomalt-Komponenten (6'-g-1,1-GPM, 6'-g-1,6-GPS, 1-g-1,6-GPS und 6-g-1,1-GPM) zur Herstellung der erfindungsgemäßen flüssigen Isomalt-Zusammensetzungen in den erfindungsgemäß vorgesehenen Gewichtsverhältnissen und Mengen ihrer Einzelkomponenten miteinander und mit weiteren Komponenten, insbesondere 1,1-GPM, 1,6-GPS und gegebenenfalls 1,1-GPS, gemischt und mittels eines Lösungsmittels, bevorzugt mit einem wässrigen Lösungsmittel, insbesondere Wasser, in flüssige Form gebracht werden.

Weitere vorteilhafte Ausgestaltungen der Erfindung ergeben sich aus den Unteransprüchen.

Die Erfindung wird anhand von Ausführungsbeispielen näher erläutert.

**Beispiel 1**

**Herstellung erfindungsgemäßer flüssiger Isomalt-Zusammensetzungen**

Sowohl für die Herstellung der erfindungsgemäßen flüssigen Isomalt-Zusammensetzungen als auch flüssiger Vergleichs-Isomalt-Zusammensetzungen wurden, wie nachstehend beschrieben, in einem ersten Schritt kristalline Isomalt-basierte Gemische hergestellt. Diese wiesen 1,6-GPS und 1,1-GPM in einem äquimolaren Verhältnis von 43 bis 57 Gew.-% 1,6-GPS zu 57 bis 43 Gew.-% 1,1-GPM auf und werden im Folgenden als Isomalt-ST-basierte Zusammensetzungen (Isomalt-ST-Basis) bezeichnet (siehe Tabelle 1). Darüber hinaus wurden kristalline Isomalt-Zusammensetzungen und Vergleichs-Isomalt-Zusammensetzungen hergestellt, die 1,6-GPS und 1,1-GPM in einem Verhältnis von 70 bis 80 Gew.-% 1,6-GPS zu 30 bis 20 Gew.-% 1,1-GPM aufweisen und als Isomalt-GS-basierte Zusammensetzungen (Isomalt-GS-Basis) bezeichnet werden (siehe Tabelle 1).

Für die Herstellung der genannten kristallinen Isomalt-Zusammensetzungen wurde gemäß Beispiel 1 der EP 0 625 578 A1 eine dort als hydrierte isomerisierte Saccharose bezeichnete Isomalt-Zusammensetzung (Süßungsmittel) hergestellt und einer chromatographischen Auftrennung der in dieser Zusammensetzung enthaltenen Komponenten 1,1-GPM, 1,6-GPS, 1,1-GPS, 6'-g-1,1-GPM, 6'-g-1,6-GPS, 1-g-1,6-GPS, 6-g-1,1-GPM, Desoxy-Disaccharidalkoholfraktion und Glycosylglycitolfraktion unterzogen. Die nach der Auftrennung gewonnenen, in isolierter Form erhaltenen einzelnen Komponenten wurden mit kommerziell erhältlichem Mannit und Sorbit in den aus der nachstehenden Tabelle 1 ersichtlichen Mengen und Mengenverhältnissen miteinander gemischt und so im Wesentlichen kristalline Gemische erhalten. Ausgehend von den so hergestellten kristallinen Isomalt-Zusammensetzungen (Proben 17 bis 32, Tabelle 1) und Vergleichs-Isomalt-Zusammensetzungen (Proben 1 bis 16, Tabelle 1) wurden in einem weiteren Schritt jeweils erfindungsgemäße wässrige Lösungen mit einem Trockensubstanzanteil von 75 Gew.-% basierend auf dem Gesamtgewicht der Lösung angesetzt.

Probe 3 (Vergleichs-Isomalt-Zusammensetzung) lässt sich auch durch Anwendung der in Beispiel 1 der EP 0 625 578 A1 genannten Verfahrensbedingungen auf eine isomerisierte Saccharoselösung und anschließende chromatographische Aufreinigung erhalten.

Sowohl die flüssigen Vergleichs-Isomalt-Zusammensetzungen als auch die erfindungsgemäßen flüssigen Isomalt-Zusammensetzungen weisen identische Komponenten auf, insbesondere sind die Isomalt-Zusammensetzungen durch Anwesenheit der vier glycosylierten Isomalt-Komponenten ausgezeichnet. Die erfindungsgemäßen Isomalt-Zusammensetzungen zeichnen sich gegenüber den Vergleichs-Isomalt-Zusammensetzungen insbesondere durch andere Mengenverhältnisse der vier glycosylierten Isomalt-Komponenten zueinander aus.

Tabelle 1

| Probennummer | 6'-G-1.1 GPM g/100 g TS | 6-G-1.6 GPS g/100 g TS | 1-G-1.6-GPS g/100 g TS | 6-G-1.1-GPM g/100 g TS | Verhältnis | 1,1-GPM g/100 g TS | 1,6-GPS g/100 g TS | 1,1-GPS g/100 g TS | Mannit g/100 g TS | Sorbit g/100 g TS | Desoxy-Disaccharidalkohole g/100 g TS | Glucosyl glycitole g/100 g TS | Summe 1,1-GPM + 1,6-GPS g/100 g TS |
|---|---|---|---|---|---|---|---|---|---|---|---|---|---|
| | | | GC - Analyse | | | | | | | GC - Analyse | | | |
| **Vergleich — Isomalt ST Basis** | | | | | | | | | | | | | |
| 1 | 0,06 | 0,03 | 0,01 | 0,05 | 1 : 0,5 : 0,2 : 0,8 | 47,8 | 50,8 | 0,31 | 0,05 | 0,15 | 0,3 | 0,25 | 98,6 |
| 2 | 0,02 | 0,03 | 0,05 | 0,08 | 1 : 1,5 : 2,5 : 4,0 | 48,9 | 50,3 | 0,27 | 0,05 | 0,09 | 0,07 | 0,12 | 99,2 |
| 3 | 0,02 | 0,02 | 0,04 | 0,06 | 1 : 1,0 : 2,0 : 3,0 | 48,3 | 50,5 | 0,25 | 0,04 | 0,08 | 0,09 | 0,02 | 98,8 |
| 4 | 0,06 | 0,11 | 0,12 | 0,19 | 1 : 1,8 : 2,0 : 3,2 | 47,8 | 51,1 | 0,27 | 0,08 | 0,12 | 0,1 | 0,04 | 98,9 |
| 5 | 0,12 | 0,13 | 0,19 | 0,2 | 1 : 1,1 : 1,6 : 1,7 | 48,1 | 50,5 | 0,28 | 0,03 | 0,07 | 0,09 | 0,03 | 98,6 |
| 6 | 0,05 | 0,03 | 0,04 | 0,12 | 1 : 0,6 : 0,8 : 2,4 | 47,7 | 50,6 | 0,36 | 0,04 | 0,09 | 0,14 | 0,24 | 98,3 |
| 7 | 0,14 | 0,18 | 0,23 | 0,09 | 1 : 1,3 : 1,6 : 0,6 | 47,2 | 51,4 | 0,23 | 0,04 | 0,13 | 0,08 | 0,03 | 98,6 |
| 8 | 0,04 | 0,06 | 0,05 | 0,09 | 1 : 1,5 : 1,3 : 2,3 | 44,8 | 53,7 | 0,24 | 0,03 | 0,09 | 0,07 | 0,02 | 98,5 |
| **Isomalt GS Basis** | | | | | | | | | | | | | |
| 9 | 0,07 | 0,04 | 0,01 | 0,06 | 1 : 0,6 : 0,1 : 0,9 | 23,6 | 75,1 | 0,46 | 0,05 | 0,16 | 0,17 | 0,2 | 98,7 |
| 10 | 0,03 | 0,05 | 0,1 | 0,11 | 1 : 1,7 : 3,3 : 3,7 | 22,4 | 76,2 | 0,43 | 0,04 | 0,11 | 0,1 | 0,24 | 98,6 |
| 11 | 0,04 | 0,05 | 0,12 | 0,13 | 1 : 1,3 : 3,0 : 3,3 | 22,4 | 76,2 | 0,37 | 0,06 | 0,18 | 0,07 | 0,03 | 98,6 |
| 12 | 0,09 | 0,13 | 0,13 | 0,24 | 1 : 1,4 : 1,4 : 2,7 | 22,6 | 76 | 0,41 | 0,07 | 0,17 | 0,09 | 0,01 | 98,6 |
| 13 | 0,16 | 0,14 | 0,21 | 0,28 | 1 : 0,9 : 1,3 : 1,8 | 23 | 75,2 | 0,55 | 0,05 | 0,13 | 0,14 | 0,05 | 98,2 |
| 14 | 0,05 | 0,06 | 0,08 | 0,09 | 1 : 1,2 : 1,6 : 1,8 | 22,9 | 75,5 | 0,57 | 0,05 | 0,15 | 0,12 | 0,09 | 98,4 |
| 15 | 0,04 | 0,06 | 0,04 | 0,11 | 1 : 1,5 : 1,0 : 2,8 | 22,6 | 75,9 | 0,4 | 0,04 | 0,13 | 0,1 | 0,04 | 98,5 |
| 16 | 0,09 | 0,13 | 0,11 | 0,19 | 1 : 1,4 : 1,2 : 2,1 | 22,5 | 76,2 | 0,35 | 0,04 | 0,12 | 0,12 | 0,08 | 98,7 |
| **Erfindung — Isomalt ST Basis** | | | | | 1 : (0,7 - 1,3) : (0,3 - 1,1) : (1 - 2) | | | | | | | | |
| 17 | 0,07 | 0,05 | 0,02 | 0,07 | 1 : 0,7 : 0,3 : 1,0 | 47 | 50,7 | 0,3 | 0,05 | 0,1 | 0,1 | 0,38 | 97,7 |
| 18 | 0,02 | 0,02 | 0,01 | 0,03 | 1 : 1,0 : 0,5 : 1,5 | 47,3 | 51,9 | 0,29 | 0,04 | 0,1 | 0,1 | 0,13 | 99,2 |
| 19 | 0,08 | 0,1 | 0,08 | 0,15 | 1 : 1,3 : 1,0 : 1,9 | 48,3 | 50,5 | 0,21 | 0,03 | 0,08 | 0,08 | 0,14 | 98,8 |
| 20 | 0,18 | 0,13 | 0,16 | 0,26 | 1 : 0,7 : 0,9 : 1,4 | 49,9 | 48 | 0,22 | 0,05 | 0,13 | 0,09 | 0,33 | 97,9 |
| 21 | 0,02 | 0,02 | 0,02 | 0,03 | 1 : 1,0 : 1,0 : 1,5 | 47,8 | 51,1 | 0,33 | 0,05 | 0,11 | 0,13 | 0,27 | 98,9 |
| 22 | 0,07 | 0,07 | 0,06 | 0,08 | 1 : 1,0 : 0,9 : 1,1 | 47,5 | 50,9 | 0,36 | 0,07 | 0,17 | 0,21 | 0,2 | 98,4 |
| 23 | 0,06 | 0,07 | 0,06 | 0,11 | 1 : 1,2 : 1,0 : 1,8 | 48,7 | 50,2 | 0,24 | 0,03 | 0,06 | 0,05 | 0,14 | 98,9 |
| 24 | 0,11 | 0,14 | 0,12 | 0,22 | 1 : 1,3 : 1,1 : 2,0 | 48,1 | 50,6 | 0,22 | 0,07 | 0,13 | 0,12 | 0,06 | 98,7 |
| **Isomalt GS Basis** | | | | | | | | | | | | | |
| 25 | 0,09 | 0,06 | 0,03 | 0,09 | 1 : 0,7 : 0,3 : 1,0 | 21 | 77,1 | 0,38 | 0,04 | 0,12 | 0,08 | 0,1 | 98,1 |
| 26 | 0,05 | 0,04 | 0,04 | 0,08 | 1 : 0,8 : 0,8 : 1,6 | 22,7 | 76 | 0,49 | 0,07 | 0,2 | 0,09 | 0,12 | 98,7 |
| 27 | 0,13 | 0,12 | 0,13 | 0,21 | 1 : 0,9 : 1,0 : 1,6 | 22,7 | 75,8 | 0,44 | 0,05 | 0,17 | 0,12 | 0,09 | 98,5 |
| 28 | 0,15 | 0,15 | 0,11 | 0,18 | 1 : 1,0 : 0,7 : 1,2 | 22,1 | 76,1 | 0,46 | 0,09 | 0,22 | 0,16 | 0,26 | 98,2 |
| 29 | 0,03 | 0,03 | 0,04 | 0,06 | 1 : 1,0 : 1,3 : 2,0 | 20,6 | 78 | 0,37 | 0,05 | 0,16 | 0,11 | 0,08 | 98,6 |
| 30 | 0,06 | 0,07 | 0,05 | 0,08 | 1 : 1,2 : 0,8 : 1,3 | 22,3 | 76,5 | 0,38 | 0,04 | 0,14 | 0,13 | 0,11 | 98,8 |
| 31 | 0,03 | 0,04 | 0,02 | 0,05 | 1 : 1,3 : 0,7 : 1,7 | 22,4 | 75,9 | 0,41 | 0,08 | 0,3 | 0,23 | 0,24 | 98,3 |
| 32 | 0,08 | 0,1 | 0,09 | 0,16 | 1 : 1,3 : 1,1 : 2,0 | 22,1 | 76,1 | 0,47 | 0,06 | 0,15 | 0,12 | 0,18 | 98,2 |

**Beispiel 2**

**Untersuchung der Verfärbung bei Lagerung**

Die in Beispiel 1 hergestellten flüssigen Isomalt-Zusammensetzungen wurden jeweils in 10 L Kanistern bei einer Temperatur von 85°C für insgesamt 21 Tage gelagert. Nach 0, 2, 4, 7, 12, 14 und 21 Tagen wurde jeweils eine kleine Teilmenge entnommen, um die Farbe der Lösung nach *International Commission for Uniform Methods of Sugar Analysis* (ICUMSA, angelehnt an Methode GS2/3-9) zu messen.

Durch Verdünnen mit vollentsalztem Wasser wird eine Probenlösung mit einem Trockensubstanzgehalt (refraktometrisch) von 20% eingestellt. Die erhaltene Lösung wird in eine Einmalspritze gegeben und über einen Spritzenvorsatzfilter (Sartorius Minisart®, 0,45 $\mu$m) in eine Küvette aus optischem Glas (Durchlässigkeit ab 360 nm, Schichtdicke 5 cm mit Deckel) filtriert, wobei die ersten 5 mL verworfen werden. Die Küvette wird abgedeckt und 15 min stehen gelassen. Anschließend wird in einem Spektralphotometer (Hitachi) die Extinktion ($E_{420}$) dieser Lösung bei 420 nm gegen eine mit Wasser gefüllte Vergleichsküvette gemessen. Die Farbe in Lösung in ICUMSA Einheiten $F_{IE}$ ergibt sich durch Berechnung:

$$F_{IE} = 1000 \text{ x } \varepsilon_{420} = 1000 \text{ x } E_{420} / (d \text{ x } c)$$

$\varepsilon_{420}$ = Extinktionskoeffizient
$E_{420}$ = Extinktion (bei 420 nm)
d = Schichtdicke der Küvette (5 cm)
c = Konzentration (g/mL) = $\rho_{20\%}$ x (TS/100)
TS = Trockensubstanzgehalt (g/100g, eingestellt auf 20 g/100g)
$\rho_{20\%}$ = 1,081 (Dichte einer 20,0%-igen Messlösung)

Es wurde, wie aus nachstehender Tabelle 2 ersichtlich, bei den erfindungsgemäßen flüssigen Isomalt-Zusammensetzungen (Proben 17 bis 32) eine wesentlich geringere Verfärbung über die Lagerzeit beobachtet als bei den Vergleichs-Isomalt-Zusammensetzungen (Proben 1 bis 16). Die Vergleichs-Isomalt-Zusammensetzungen zeigten nach 21 Tagen einen deutlichen Gelbstich, während im Vergleich dazu die erfindungsgemäßen Isomalt-Zusammensetzungen nur eine schwache Gelbfärbung zeigten. Die erfindungsgemäßen flüssigen Isomalt-Zusammensetzungen zeigten eine merklich verzögerte Tendenz zur Verfärbung und erwiesen sich somit als signifikant stabiler bei der Lagerung.

Tabelle 2

| Lagerungstest - Untersuchung der Verfärbung | | | | | | | | | |
|---|---|---|---|---|---|---|---|---|---|
| | | **Farbe in Lösung (filtriert)** | | | | | | | |
| | **Lagerzeit bei 85°C (Tage)** | **0** | **2** | **4** | **7** | **12** | **14** | **21** | **Bemerkung** |
| | **Probennummer** | **ICUMSA Einheiten** | | | | | | | |
| | Isomalt ST Basis (Lösung in Wasser mit 75% TS) | | | | | | | | |
| **Vergleich** | 1 | <10 | <10 | 12 | 15 | 26 | 29 | 39 | nach 21 Tagen deutlicher Gelbstich |
| | 2 | <10 | <10 | 16 | 18 | 22 | 34 | 42 | |
| | 3 | <10 | 12 | 17 | 21 | 24 | 31 | 38 | |
| | 4 | <10 | <10 | 14 | 23 | 29 | 38 | 47 | |
| | 5 | <10 | 14 | 16 | 24 | 27 | 38 | 53 | |
| | 6 | <10 | <10 | 15 | 19 | 26 | 34 | 42 | |
| | 7 | <10 | <10 | 14 | 19 | 28 | 37 | 46 | |
| | 8 | <10 | <10 | 13 | 16 | 21 | 32 | 38 | |
| | Isomalt GS Basis (Lösung in Wasser mit 75% TS) | | | | | | | | |
| | 9 | <10 | <10 | 13 | 17 | 24 | 31 | 36 | nach 21 Tagen deutlicher Gelbstich |
| | 10 | <10 | <10 | <10 | 13 | 26 | 32 | 38 | |
| | 11 | <10 | <10 | <10 | 17 | 28 | 32 | 41 | |
| | 12 | <10 | <10 | 12 | 14 | 21 | 29 | 34 | |
| | 13 | <10 | <10 | 12 | 17 | 26 | 32 | 39 | |
| | 14 | <10 | <10 | <10 | 14 | 27 | 30 | 37 | |
| | 15 | <10 | 13 | 18 | 23 | 29 | 33 | 43 | |
| | 16 | <10 | <10 | 12 | 18 | 27 | 34 | 38 | |
| | | | | | | | | | |
| | Isomalt ST Basis (Lösung in Wasser mit 75% TS) | | | | | | | | |
| **Erfindung** | 17 | <10 | <10 | 13 | 15 | 16 | 21 | 26 | nach 21 Tagen nur schwache Gelbfärbung |
| | 18 | <10 | <10 | <10 | 12 | 17 | 19 | 24 | |
| | 19 | <10 | <10 | <10 | 11 | 14 | 18 | 21 | |
| | 20 | <10 | <10 | <10 | 16 | 17 | 21 | 25 | |
| | 21 | <10 | <10 | 12 | 14 | 15 | 20 | 23 | |
| | 22 | <10 | <10 | <10 | 12 | 19 | 24 | 28 | |
| | 23 | <10 | <10 | <10 | 13 | 17 | 21 | 26 | |
| | 24 | <10 | <10 | <10 | 12 | 16 | 19 | 24 | |

| Isomalt GS Basis (Lösung in Wasser mit 75% TS) | | | | | | | | |
|---|---|---|---|---|---|---|---|---|
| 25 | <10 | <10 | <10 | <10 | 12 | 18 | 22 | nach 21 Tagen |
| 26 | <10 | <10 | <10 | 13 | 15 | 20 | 24 | nur schwache |
| 27 | <10 | <10 | <10 | <10 | 14 | 16 | 20 | Gelbfärbung |
| 28 | <10 | <10 | <10 | 14 | 19 | 22 | 25 | |
| 29 | <10 | <10 | <10 | 13 | 18 | 23 | 28 | |
| 30 | <10 | <10 | <10 | 14 | 17 | 22 | 26 | |
| 31 | <10 | <10 | <10 | <10 | 12 | 16 | 21 | |
| 32 | <10 | <10 | <10 | <10 | 13 | 15 | 19 | |

**Patentansprüche**

1. Flüssige Isomalt-Zusammensetzung, **dadurch gekennzeichnet, dass** diese die glycosylierten Isomalt-Komponenten 1-O-(6'-O-alpha-D-glucopyranosyl)-alpha-D-glucopyranosyl-D-mannitol (6'-g-1,1-GPM), 6-O-(6'-O-alpha-D-glucopyranosyl)-alpha-D-glucopyranosyl-D-sorbitol (6'-g-1,6-GPS), 1,6-di-O-alpha-D-glucopyranosyl-D-sorbitol (1-g-1,6-GPS) und 1,6-di-O-alpha-D-glucopyranosyl-D-mannitol (6-g-1,1-GPM) aufweist, wobei das Gewichtsverhältnis von 6'-g-1,1-GPM : 6'-g-1,6-GPS : 1-g-1,6-GPS : 6-g-1,1-GPM in der flüssigen Isomalt-Zusammensetzung 1:(0,7-1,3):(0,3-1,1):(1-2) beträgt (jeweils bezogen auf Gew.-% und Trockensubstanz (TS) der glycosylierten Isomalt-Komponenten).

2. Flüssige Isomalt-Zusammensetzung nach Anspruch 1, wobei das Gewichtsverhältnis von 6'-g-1,1-GPM : 6'-g-1,6-GPS : 1-g-1,6-GPS : 6-g-1,1-GPM in der flüssigen Isomalt-Zusammensetzung 1:(0,8-1):(0,7-1):(1,2-1,8) beträgt.

3. Flüssige Isomalt-Zusammensetzung nach Anspruch 1 oder 2, wobei die flüssige Isomalt-Zusammensetzung 0,01 bis 0,2 Gew.-% 6'-g-1,1-GPM aufweist, bezogen auf das Gesamtgewicht (TS) der flüssigen Isomalt-Zusammensetzung.

4. Flüssige Isomalt-Zusammensetzung nach Anspruch 1 oder 2, wobei die flüssige Isomalt-Zusammensetzung 0,01 bis 0,2 Gew.-% 6'-g-1,6-GPS aufweist, bezogen auf das Gesamtgewicht (TS) der flüssigen Isomalt-Zusammensetzung.

5. Flüssige Isomalt-Zusammensetzung nach Anspruch 1 oder 2, wobei die flüssige Isomalt-Zusammensetzung 0,01 bis 0,2 Gew.-% 1-g-1,6-GPS aufweist, bezogen auf das Gesamtgewicht (TS) der flüssigen Isomalt-Zusammensetzung.

6. Flüssige Isomalt-Zusammensetzung nach Anspruch 1 oder 2, wobei die flüssige Isomalt-Zusammensetzung 0,01 bis 0,4 Gew.-% 6-g-1,1-GPM aufweist, bezogen auf das Gesamtgewicht (TS) der flüssigen Isomalt-Zusammensetzung.

7. Flüssige Isomalt-Zusammensetzung nach einem der vorhergehenden Ansprüche, wobei die flüssige Isomalt-Zusammensetzung mindestens 86 Gew.-% 1,6-GPS und 1,1-GPM aufweist, bezogen auf das Gesamtgewicht (TS) der flüssigen Isomalt-Zusammensetzung.

8. Flüssige Isomalt-Zusammensetzung nach einem der vorhergehenden Ansprüche, wobei die flüssige Isomalt-Zusammensetzung mindestens 40 Gew.-% 1,6-GPS aufweist, bezogen auf das Gesamtgewicht (TS) der flüssigen Isomalt-Zusammensetzung.

9. Flüssige Isomalt-Zusammensetzung nach einem der vorhergehenden Ansprüche, wobei die flüssige Isomalt-Zusammensetzung 0,1 bis 1,0 Gew-% 1,1-GPS (1-O-alpha-glucopyranosyl-D-sorbitol) aufweist, bezogen auf das Gesamtgewicht (TS) der flüssigen Isomalt-Zusammensetzung.

10. Flüssige Isomalt-Zusammensetzung nach einem der vorhergehenden Ansprüche, wobei die flüssige Isomalt-Zusammensetzung 0,01 bis 2,0 Gew.-% Desoxy-Disaccharidalkohole aufweist, bezogen auf das Gesamtgewicht (TS) der flüssigen Isomalt-Zusammensetzung.

11. Flüssige Isomalt-Zusammensetzung nach einem der vorhergehenden Ansprüche, wobei die flüssige Isomalt-Zusammensetzung 0,01 bis 2,0 Gew.-% Glucosylglycitole aufweist, bezogen auf das Gesamtgewicht (TS) der flüssigen Isomalt-Zusammensetzung.

12. Flüssige Isomalt-Zusammensetzung nach einem der vorhergehenden Ansprüche, wobei die flüssige Isomalt-Zusammensetzung 0,01 bis 0,3 Gew.-% Mannit aufweist, bezogen auf das Gesamtgewicht (TS) der flüssigen Isomalt-Zusammensetzung.

13. Flüssige Isomalt-Zusammensetzung nach einem der vorhergehenden Ansprüche, wobei die flüssige Isomalt-Zusammensetzung 0,01 bis 0,4 Gew.-% Sorbit aufweist, bezogen auf das Gesamtgewicht (TS) der flüssigen Isomalt-Zusammensetzung.

14. Flüssige Isomalt-Zusammensetzung nach einem der vorhergehenden Ansprüche, wobei die flüssige Isomalt-Zusammensetzung mindestens 5 Gew.-% Trockensubstanzgehalt aufweist, bezogen auf das Gesamtgewicht der flüssigen Isomalt-Zusammensetzung.

15. Flüssige Isomalt-Zusammensetzung nach einem der vorhergehenden Ansprüche, wobei die flüssige Isomalt-Zusammensetzung 10 bis 50 Gew.-% Trockensubstanzgehalt aufweist, bezogen auf das Gesamtgewicht der flüssigen Isomalt-Zusammensetzung.

16. Verwendung der flüssigen Isomalt-Zusammensetzung nach einem der Ansprüche 1 bis 15 in Nahrungs- oder Genussmitteln.

17. Verwendung der flüssigen Isomalt-Zusammensetzung nach Anspruch 16 zur Beschichtung von Kaugummis.

**Claims**

1. Liquid isomalt composition, **characterized in that** it comprises the glycosylated isomalt components 1-O-(6'-O-alpha-D-glucopyranosyl)-alpha-D-glucopyranosyl-D-mannitol (6'-g-1,1-GPM), 6-O-(6'-O-alpha-D-glucopyranosyl)-alpha-D-glucopyranosyl-D-sorbitol (6'-g-1,6-GPS), 1,6-di-O-alpha-D-glucopyranosyl-D-sorbitol (1-g-1,6-GPS) and 1,6-di-O-alpha-D-glucopyranosyl-D-mannitol (6-g-1,1-GPM), wherein the weight ratio of 6'-g-1,1-GPM : 6'-g-1,6-GPS : 1-g-1,6-GPS : 6-g-1,1-GPM in the liquid isomalt composition is 1:(0.7-1.3):(0.3-1.1):(1-2) (each based on wt. - % and dry substance (DS) of the glycosylated isomalt components).

2. Liquid isomalt composition according to claim 1, wherein the weight ratio of 6'-g-1,1-GPM : 6'-g-1,6-GPS : 1-g-1,6-GPS : 6-g-1,1-GPM in the liquid isomalt composition is 1:(0.8-1):(0.7-1):(1.2-1.8).

3. Liquid isomalt composition according to claim 1 or 2, wherein the liquid isomalt composition has 0.01 to 0.2 wt.-% 6'-g-1,1-GPM, based on the total weight (DS) of the liquid isomalt composition.

4. Liquid isomalt composition according to claim 1 or 2, wherein the liquid isomalt composition has 0.01 to 0.2 wt.-% 6'-g-1,6-GPS, based on the total weight (DS) of the liquid isomalt composition.

5. Liquid isomalt composition according to claim 1 or 2, wherein the liquid isomalt composition has 0.01 to 0.2 wt.-% 1-g-1,6-GPS, based on the total weight (DS) of the liquid isomalt composition.

6. Liquid isomalt composition according to claim 1 or 2, wherein the liquid isomalt composition has 0.01 to 0.4 wt.-% 6-g-1,1-GPM, based on the total weight (DS) of the liquid isomalt composition.

7. Liquid isomalt composition according to any one of the preceding claims, wherein the liquid isomalt composition has at least 86 wt.-% of 1,6-GPS and 1,1-GPM, based on the total weight (DS) of the liquid isomalt composition.

8. Liquid isomalt composition according to any one of the preceding claims, wherein the liquid isomalt composition has at least 40 wt.-% 1,6-GPS, based on the total weight (DS) of the liquid isomalt composition.

9. Liquid isomalt composition according to any one of the preceding claims, wherein the liquid isomalt composition has 0.1 to 1.0 wt.-% 1,1-GPS (1-O-alpha-glucopyranosyl-D-sorbitol), based on the total weight (DS) of the liquid isomalt composition.

10. Liquid isomalt composition according to any one of the preceding claims, wherein the liquid isomalt composition has 0.01 to 2.0 wt.-% of deoxy-disaccharide alcohols, based on the total weight (DS) of the liquid isomalt composition.

11. Liquid isomalt composition according to any one of the preceding claims, wherein the liquid isomalt composition has 0.01 to 2.0 wt.-% glucosylglycitols, based on the total weight (DS) of the liquid isomalt composition.

12. Liquid isomalt composition according to any one of the preceding claims, wherein the liquid isomalt composition has 0.01 to 0.3 wt.-% mannitol, based on the total weight (DS) of the liquid isomalt composition.

13. Liquid isomalt composition according to any one of the preceding claims, wherein the liquid isomalt composition has 0.01 to 0.4 wt.-% sorbitol, based on the total weight (DS) of the liquid isomalt composition.

14. Liquid isomalt composition according to any one of the preceding claims, wherein the liquid isomalt composition has at least 5 wt.-% dry substance content, based on the total weight of the liquid isomalt composition.

15. Liquid isomalt composition according to any one of the preceding claims, wherein the liquid isomalt composition has 10 to 50 wt.-% dry substance content, based on the total weight of the liquid isomalt composition.

16. Use of the liquid isomalt composition according to any one of claims 1 to 15 in food or enjoyment food products.

17. Use of the liquid isomalt composition according to claim 16 for coating chewing gums.

**Revendications**

1. Composition liquide d'isomalt, **caractérisée en ce qu'**elle comprend les composants isomalt glycosylés 1-O-(6'-O-alpha-D-glucopyranosyl)-alpha-D-glucopyranosyl-D-mannitol (6'-g-1,1-GPM), 6-O-(6'-O-alpha-D-glucopyranosyl)-alpha-D-glucopyranosyl-D-sorbitol (6'-g-1,6-GPS), 1,6-di-O-alpha-D-glucopyranosyl-D-sorbitol (1-g-1,6-GPS) et 1,6-di-O-alpha-D-glucopyranosyl-D-mannitol (6-g-1,1-GPM), le rapport pondéral de 6'-g-1,1-GPM : 6'-g-1,6-GPS : 1-g-1,6-GPS : 6-g-1,1-GPM dans la composition d'isomalt liquide 1 :(0,7-1,3) :(0,3-1,1) :(1-2) (dans chaque cas sur la base du % en poids et de la matière sèche (MS) des composants isomalt glycosylés).

2. Composition isomalt liquide selon la revendication 1, dans laquelle le rapport pondéral 6'-g-1,1-GPM : 6'-g-1,6-GPS : 1-g-1,6-GPS : 6-g-1,1-GPM dans la composition isomalt liquide est 1 :(0,8-1) :(0,7-1) :(1,2-1,8).

3. Composition d'isomalt liquide selon la revendication 1 ou 2, dans laquelle la composition d'isomalt liquide comprend de 0,01 à 0,2 % en poids de 6'-g-1,1-GPM, sur la base du poids total (MS) de la composition d'isomalt liquide.

4. Composition d'isomalt liquide selon la revendication 1 ou 2, dans laquelle la composition d'isomalt liquide comprend de 0,01 à 0,2 % en poids de 6'-g-1,6-GPS, sur la base du poids total (MS) de la composition d'isomalt liquide.

5. Composition liquide d'isomalt selon la revendication 1 ou 2, dans laquelle la composition liquide d'isomalt comprend de 0,01 à 0,2 % en poids de 1-g-1,6-GPS, sur la base du poids total (MS) de la composition liquide d'isomalt.

6. Composition d'isomalt liquide selon la revendication 1 ou 2, dans laquelle la composition d'isomalt liquide comprend de 0,01 à 0,4 % en poids de 6-g-1,1-GPM, sur la base du poids total (MS) de la composition d'isomalt liquide.

7. Composition d'isomalt liquide selon l'une quelconque des revendications précédentes, dans laquelle la composition d'isomalt liquide comprend au moins 86 % en poids de 1,6-GPS et de 1,1-GPM, par rapport au poids total (MS) de la composition d'isomalt liquide.

8. Composition d'isomalt liquide selon l'une quelconque des revendications précédentes, dans laquelle la composition d'isomalt liquide comprend au moins 40 % en poids de 1,6-GPS, sur la base du poids total (MS) de la composition d'isomalt liquide.

9. Composition d'isomalt liquide selon l'une quelconque des revendications précédentes, dans laquelle la composition d'isomalt liquide comprend de 0,1 à 1,0 % en poids de 1,1-GPS (1-O-alpha-glucopyranosyl-D-sorbitol), sur la base du poids total (MS) de la composition d'isomalt liquide.

10. Composition d'isomalt liquide selon l'une quelconque des revendications précédentes, dans laquelle la composition d'isomalt liquide comprend de 0,01 à 2,0 % en poids d'alcools désoxy-disaccharides, sur la base du poids total (MS) de la composition d'isomalt liquide.

11. Composition liquide d'isomalt selon l'une quelconque des revendications précédentes, dans laquelle la composition liquide d'isomalt comprend de 0,01 à 2,0 % en poids de glucosylglycitols, sur la base du poids total (MS) de la composition liquide d'isomalt.

12. Composition d'isomalt liquide selon l'une quelconque des revendications précédentes, dans laquelle la composition d'isomalt liquide comprend de 0,01 à 0,3 % en poids de mannitol, sur la base du poids total (MS) de la composition d'isomalt liquide.

13. Composition d'isomalt liquide selon l'une quelconque des revendications précédentes, dans laquelle la composition d'isomalt liquide comprend de 0,01 à 0,4 % en poids de sorbitol, sur la base du poids total (MS) de la composition d'isomalt liquide.

14. Composition liquide d'isomalt selon l'une quelconque des revendications précédentes, dans laquelle la composition liquide d'isomalt présente une teneur en matière sèche d'au moins 5 % en poids, sur la base du poids total de la composition liquide d'isomalt.

15. Composition isomalt liquide selon l'une quelconque des revendications précédentes, dans laquelle la composition isomalt liquide présente une teneur en matière sèche de 10 à 50 % en poids, sur la base du poids total de la composition isomalt liquide.

16. Utilisation de la composition liquide isomalt selon l'une quelconque des revendications 1 à 15 dans des produits alimentaires ou de luxe.

17. Utilisation de la composition liquide isomalt selon la revendication 16 pour l'enrobage de chewing-gums.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2520173 A1
- EP 0625578 A1
- EP 0859006 B2
- WO 1997008958 A1